(19) Europäisches Patentamt
European Patent Office
Office européen des brevets

(11) Veröffentlichungsnummer: **0 044 419**
**B1**

# (12) EUROPÄISCHE PATENTSCHRIFT

(45) Veröffentlichungstag der Patentschrift: **04.04.84**

(51) Int. Cl.³: **C 08 L 77/00**, C 08 K 5/34

(21) Anmeldenummer: **81104771.1**

(22) Anmeldetag: **22.06.81**

(54) **Flammfeste Polyamidformmassen.**

(30) Priorität: **21.07.80 DE 3027622**

(43) Veröffentlichungstag der Anmeldung: **27.01.82 Patentblatt 82/4**

(45) Bekanntmachung des Hinweises auf die Patenterteilung: **04.04.84 Patentblatt 84/14**

(84) Benannte Vertragsstaaten: **CH DE FR GB IT LI NL SE**

(56) Entgegenhaltungen: **CHEMICAL ABSTRACTS, Band 85, 1976, Seite 45, Nr. 95277n Columbus, Ohio, U.S.A.**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Dhein, Rolf, Dr., Deswatinesstrasse 30, D-4150 Krefeld (DE)**
Erfinder: **Rottmaier, Bergstrasse 85, D-5068 Odenthal (DE)**
Erfinder: **Merten, Rudolf, Dr., Berta-von-Suttner-Strasse 55, D-5090 Leverkusen 1 (DE)**
Erfinder: **Siebourg, Wolfgang, Dr. z.ZT. Mobay Chemical Corp., Penn Lincoln Parkway West, Pittsburgh, PA 15205 (US)**

**EP 0 044 419 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Flammfeste Polyamidformmassen

Verschiedene Verfahren wurden bereits vorgeschlagen, um thermoplastische Kunststoffe flammwidrig und feuerhemmend auszurüsten. Das am häufigsten angewandte Verfahren besteht in der Zumischung eines Flammschutzmittels zum Harz. Zu den bekannten feuerhemmenden Mitteln gehören halogenhaltige Verbindungen und stickstoffhaltige Verbindungen.

Als hochwirksame Brandschutzmittel für Polyamidformmassen werden heute im technischen Maßstab Halogenverbindungen gegebenenfalls mit synergistisch wirkenden Metallverbindungen oder pulverisierter roter Phosphor eingesetzt. Diese Brandschutzmittel und ihre Verwendung sind beispielsweise im US-PS 3 418 267, in der DE-AS 1 694 494, der DE-OS 2 544 219 und der DE-AS 1 931 387 beschrieben.

Halogenverbindungen senken die Kriechstromfestigkeit der Polyamidformmassen. Ferner bildet sich im Brandfalle Halogenwasserstoff, der in der Umgebung des Brandherdes erhebliche Korrosionen verursachen kann. Halogenverbindungen enthaltende Formmassen spalten in geringem Maße auch bereits bei den erforderlichen hohen Verarbeitungstemperaturen in den Verarbeitungsmaschinen Halogenwasserstoff ab, der die Maschinen schädigt.

Der pulverförmige rote Phosphor läßt sich nur schwierig handhaben, da er in Gegenwart von Luft bei Kontakt mit heißen Metallflächen, unter Bedingungen, die bei den üblichen Herstellungs- und Verarbeitungsmaschinen der Formmassen meistens gegeben sind, zu Staubexplosionen neigt.

Nachteilig ist weiterhin die leichte Entwicklung von giftigen Phosphor-Wasserstoff-Verbindungen, die bei den hohen Verarbeitungstemperaturen der Formmassen durch Reaktion des Phosphors mit Polyamiden stattfinden kann. Zahlreiche zusätzliche Verfahrensschritte sind — wie sie beispielsweise in den DE-AS 2 308 104, 2 625 673 und 2 625 691 beschrieben sind — empfohlen worden, um diese Entwicklung möglichst einzudämmen.

Schließlich erschwert die rote Eigenfarbe des Phosphors die Einstellung heller Farbtöne bei den Formmassen. Die zur Überdeckung der roten Farbe notwendige Menge an Weißpigmenten führt im allgemeinen zur Verschlechterung der mechanischen Eigenschaften.

Zur Flammfestausrüstung von Polyamidharzmassen wurde ferner der Zusatz von Melamin vorgeschlagen (DE-AS 1 694 254), sowie der Zusatz von Cyanursäure (US-PS 3 980 616) sowie der Zusatz sowohl von Melamin als auch von Cyanursäure (US-PS 4 001 177).

Im Falle des Zusatzes von Melamin erzielt man eine befriedigende Flammfestausrüstung, aber das Melamin kann unter den Formbedingungen sublimieren und sich auf der Form abscheiden. Diese Erscheinung wird als »Ausplattung« bezeichnet. Hierbei kommt es zu unerwünschten Ablösen oder zu einer Verfleckung des Formkörpers.

Daher ist manchmal das Aussehen der Produkte nicht zufriedenstellend.

Im Falle der Zugabe von Cyanursäure werden die mechanischen Eigenschaften des Formkörpers schon bei geringen Mengen an Flammschutzmittel beeinträchtigt und erhebliche Ausblüherscheinungen beobachtet. Im Falle der Zugabe von Cyanursäure und Melamin ist es erforderlich mindestens 10 Gew.-Teile auf 100 Gew.-Teile Polyamidharz einzusetzen, um eine befriedigende Flammfestausrüstung zu erzielen. Die »Ausplattung« und die »Ausblühung« sind dabei ebenfalls nicht gering.

Mit Hilfe des erfindungsgemäßen Flammschutzmittels gelingt es, eine Polyamidharzmasse zu schaffen, die zufriedenstellende Flammfestcharakteristika zeigt, sich zur Herstellung von Formkörpern eignet und insbesondere weder zur Ausplattung noch zu Ausblühungen führt. Außerdem werden, da alle Komponenten fast farblos bzw. weiß sind, Polyamidformmassen mit verbessertem Brandverhalten (nach UL) in hellen Farben zugänglich, die keine der für die Halogenverbindungen und den roten Phosphor angeführten Nachteile aufweisen.

Gegenstand der vorliegenden Erfindung sind daher selbstverlöschende, gegebenenfalls Verstärkungsmittel und/oder übliche Hilfs- und Zusatzstoffe enthaltende thermoplastische Polyamidformmassen, die dadurch gekennzeichnet sind, daß sie 0,1 – 20 Gew.-%, bezogen auf die gesamte Formmasse, Triazolidin-3,5-dione der Formel I und/oder Reaktionsprodukte von Triazolidin-3,5-dionen der Formeln II bis V als Flammschutzmittel enthalten.

Aromatische und aliphatische Polyamide können mit den erfindungsgemäßen Flammschutzmitteln flammfest ausgerüstet werden, so z. B. Polyamide, die durch Polymerisation von Lactamen mit wenigstens 7 Ringgliedern oder entsprechenden $\omega$-Aminocarbonsäuren erhalten werden, wie z. B. $\varepsilon$-Caprolactam, Aminocapronsäure, Enatholactam, 7-Aminohexansäure, 9-Aminononansäure, 11-Aminoundecansäure, $\alpha$-Pyrrolidon und Piperidon, oder Polyamidharze, die durch Polykondensation von aliphatischen Diaminen wie Hexamethylendiamin, 2,2,4-, 2,4,4-Trimethylhexamethylendiamin, Isophorondiamin, 1,3-, 1,4-Bisaminocyclohexan, Bis-amino-cyclohexylalkane, Xylylendiamin und aliphatischen oder aromatischen Dicarbonsäuren wie Adipinsäure, Sebacinsäure, Azelaeinsäure, Dodecandisäure, Glutarsäure, Cyclohexandicarbonsäure, Isophthalsäure, Terephthalsäure erhalten werden.

Außerdem kommen Polyamide in Betracht, die aus den genannten aliphatischen Dicarbonsäuren und aromatischen Diaminen wie z. B. 1,3- und 1,4-Diaminobenzol hergestellt werden, sowie Polyamid-Gemische und Copolyamide aus allen genannten Komponenten, soweit aliphatische oder

teilaliphatische Polyamide entstehen. Besonders bevorzugt sind Polyamid-6 und Polyamid-6,6.

Die erfindungsgemäß einzusetzenden Triazolidin-3,5-dione haben die allgemeine Formel I

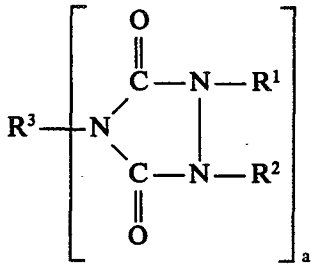

(I)

worin

$R^1$ und $R^2$ gleich oder verschieden, unabhängig voneinander für Wasserstoff, einen gegebenenfalls mit Halogen oder Hydroxygruppen substituierten aliphatischen $C_1-C_6$, cycloaliphatischen $C_4-C_{10}$, araliphatischen $C_7-C_{10}$, aromatischen $C_6-C_{10}$ und einen gegebenenfalls mit Halogen substituierten $C_2-C_6$-Alkylcarbonylrest, bevorzugt für H, einen $C_1-C_4$ Alkyl-, $C_4-C_6$ Cycloalkyl oder einen mit $CH_3$ substituiertes Phenyl, besonders bevorzugt für H steht,

$R^3$ einen aliphatischen $C_1-C_{20}$, bevorzugt $C_1-C_6$, cycloaliphatischen $C_4-C_{17}$, bevorzugt $C_4-C_{10}$, araliphatischen $C_7-C_{17}$ oder aromatischen $C_6-C_{15}$, bevorzugt einen gegebenenfalls mit $CH_3$ substituierten $C_6-C_{12}$ aromatischen Rest

a eine ganze Zahl von 2 bis 5, besonders bevorzugt 2 oder 3, bedeutet.

Die Herstellung dieser Triazolidin-3,5-dione der allgemeinen Formel I ist aus der Literatur bekannt und kann z. B. durch Erhitzen auf über 200°C aus Hydrazin-N,N'-dicarbonsäurediamid unter Ammoniakabspaltung wie in der deutschen Patentanmeldung 2 947 619.5 beschrieben, durch Reaktion von Mono- oder Diaminen mit Hydrazodicarbonamid unter Ammoniakabspaltung, durch Reaktion von Isocyanaten mit Semicarbazid unter nachfolgender Cyclisierung, durch Reaktion von Alkylallophanat mit gegebenenfalls substituiertem Hydrazin oder durch Alkylierung und/oder Acylierung von Triazolidin-3,5-dion erfolgen.

Als Beispiele derartiger Triazolidin-3,5-dione seien genannt: Triazolidin-3,5-dion, 1-, 4-Methyltriazolidin-3,5-dion, 1-, 4-Phenyl-triazolidin-3,5-dion, 4-(4-Chlorphenyl)-, 4-(4-Bromphenyl)-triazolidin-3,5-dion, 4-(2,4-Dichlorphenyl)-triazolidin-3,5-dion, 1,2-Diacetyl-triazolidin-3,5-dion, Bis-(triazolidin-3,5-dion-4-yl)-methan, 1,2-Bis-(triazolidin-4-yl)-ethan und 1,6-Bis-(triazolidin-3,5-dion-4-yl)-hexan.

Als erfindungsgemäß einzusetzende Reaktionsprodukte von Triazolidin-3,5-dionen können vorzugsweise die entsprechenden Salze verwendet werden, wie die aus Triazolidin-3,5-dionen und organischen Aminen hergestellten Salze der allgemeinen Formel II

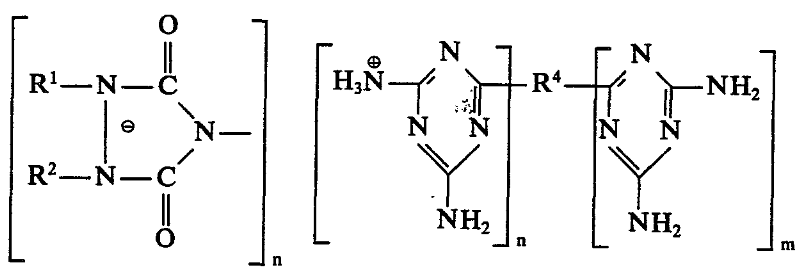

(II)

worin

$R^1$ und $R^2$ die oben angegebene Bedeutung hat,

$R^4$ für Wasserstoff eine Aminogruppe, einen gegebenenfalls mit Halogen substituierten aliphatischen $C_1-C_{20}$, bevorzugt $C_1-C_{10}$, cycloaliphatisch $C_4-C_{17}$, bevorzugt $C_5-C_{10}$, araliphatisch $C_7-C_{17}$, bevorzugt $C_7-C_{10}$ oder aromatisch $C_6-C_{15}$, bevorzugt $C_6-C_{10}$ Rest, besonders bevorzugt $NH_2$,

n für eine ganze Zahl von 1 bis 4, bevorzugt 1 bis 2,

m für eine ganze Zahl von 0 bis 3 stehen, wobei m und n höchstens 4 sein kann.

Besonders bevorzugte Triazolidin-3,5-dion-Salze sind solche der allgemeinen Formel IIa und IIb

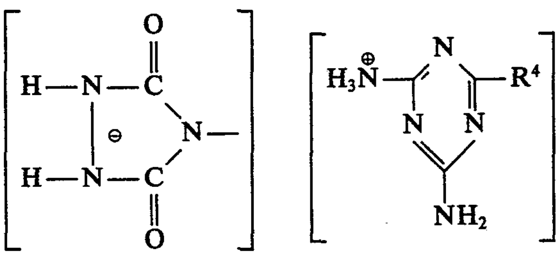

(II a)

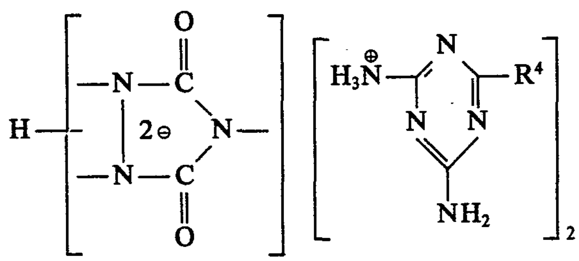

(II b)

worin $R^4$ die oben angegebene Bedeutung hat.

Als erfindungsgemäß einzusetzende Triazolidin-3,5-dion-Salze können auch solche der allgemeinen Formel III verwendet werden

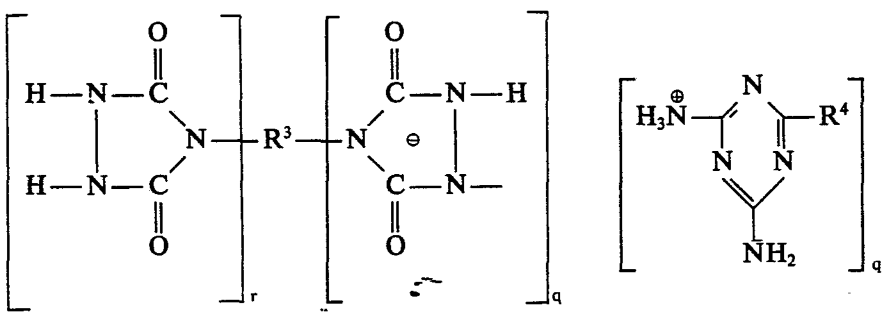

(III)

worin

$R^3$ und $R^4$ die oben angegebene Bedeutung haben und
q für eine ganze Zahl von 1 bis 5,
r für eine ganze Zahl von 0 bis 4 steht, wobei q + r höchstens 5 sein kann.

Bevorzugt werden Triazolidin-3,5-dion-Salze aus Triazolidin-3,5-dion und Melamin und/oder 1,2-Bis-(4,6-diamino-1,3,5-triazin-2-yl)ethan und/oder 1,4-Bis(4,6-diamino-1,3,5-triazin-2-yl)butan und/oder 1,6-Bis- und/oder 1,3,6-Tris(4,6-diamino-1,3,5-triazin-2-yl)hexan, sowie aus Melamin und Bis-(triazolidin-3,5-dion-yl-4)-ethan und/oder 1,6-Bis-(triazolidin-3,5-dion-yl-4)-hexan und/oder 4,4'-Bis-(triazolidin-3,5-dion-yl-4)-dicyclohexylmethan eingesetzt. Besonders bevorzugt werden Salze aus 1 Mol Triazolidin-3,5-dion und 1 Mol bzw. 2 Mol Melamin verwendet.

Die Herstellung dieser Triazolidin-3,5-dion-Salze aus Triazolidin-3,5-dionen und den entsprechenden Aminen wird gegebenenfalls unter erhöhtem Druck bei Temperaturen von vorzugsweise 30 bis 130°C in geeigneten Lösungsmitteln, vorzugsweise Wasser, durchgeführt.

Als weitere erfindungsgemäß einzusetzende Reaktionsprodukte von Triazolidin-3,5-dionen können Mannichbasen der allgemeinen Formel IVa und IVb

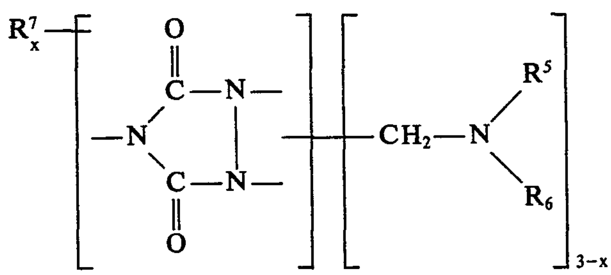

(IV a)

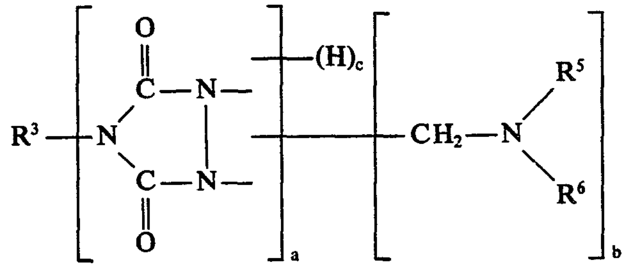

(IVb)

worin

| | |
|---|---|
| $R^3$ | die oben angegebene Bedeutung hat, |
| $R^5$ | für Wasserstoff, einen gegebenenfalls mit Halogen, Hydroxy oder $C_1-C_4$-Alkoxy substituierten aliphatischen $C_1-C_{10}$, cycloaliphatischen $C_4-C_{10}$, araliphatischen $C_7-C_{10}$, aromatischen $C_6-C_{10}$ und einen Heteroatome wie N, O oder S und/oder Carbonylgruppen im Ring enthaltenden $C_2-C_8$-Cycloalkyl- oder Arylrest, |
| $R^6$ | für einen gegebenenfalls mit Halogen, Cyan, Hydroxy, Amino, $C_1-C_4$-Alkyl- oder Dialkylamino, $C_1-C_4$-Alkoxy, Hydroxycarbonyl, $C_2-C_4$ Alkoxycarbonyl substituierten aliphatischen $C_1-C_{10}$, cycloaliphatischen $C_4-C_{10}$, araliphatischen $C_7-C_{10}$, aromatischen $C_6-C_{10}$ oder Heteroatome wie N, O oder S bzw. Carbonylgruppen im Ring enthaltende $C_2-C_{12}$ Cycloalkyl- oder Arylrest, |
| $R^7$ | für Wasserstoff, einen gegebenenfalls mit Halogen oder Hydroxy substituierten aliphatischen $C_1-C_6$, cycloaliphatischen $C_4-C_{10}$, araliphatischen $C_7-C_{10}$ oder aromatischen $C_6-C_{10}$-Rest, |
| x | für 0 bis 2, |
| a | für eine ganze Zahl von 1 bis 5, bevorzugt 1 bis 3, |
| b | für eine ganze Zahl von 1 bis 2 a und |
| c | für eine ganze Zahl von 2 a – b steht, |

verwendet werden.

Besonders bevorzugte Mannichbasen der allgemeinen Formel IV sind solche, in denen $R^5$ für Wasserstoff oder niederen Alkylrest, $R^6$ für

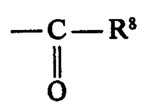

worin

| | |
|---|---|
| $R^8$ | für einen aliphatischen $C_1-C_{10}$, cycloaliphatischen $C_4-C_{10}$, araliphatischen $C_7-C_{15}$ und aromatischen $C_6-C_{10}$ Rest steht. |

Die Reste $R^5$ und $R^6$ können auch als Glieder eines cyclischen $C_2-C_8$-Restes, der gegebenenfalls noch weitere Heteroatome wie N, O, S und/oder Carbonylgruppen im Ring enthalten kann, miteinander verknüpft sein.

Diese Verbindungen leiten sich bevorzugt von Amiden wie Acetamid, Lactamen wie Caprolactam, Parabansäure, Bisparabansäuren, Hydantoinen, über 1,1- oder 3,3-Stellung miteinander verknüpfte Bishydantoine, Barbitursäure, cyclischen Imiden wie Bernsteinsäureimid und Phthalsäureimid ab.

Weitere besonders bevorzugte Mannichbasen der allgemeinen Formel IV sind solche, in denen der Rest $R^5$ für Wasserstoff und $R^6$ für den Rest

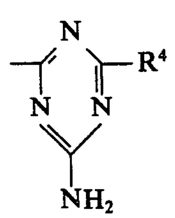

worin

| | |
|---|---|
| $R^4$ | die oben angegebene Bedeutung hat. |

Außerdem können als erfindungsgemäß einzusetzende Mannichbasen aus Triazolidin-3,5-dionen solche der allgemeinen Formel V

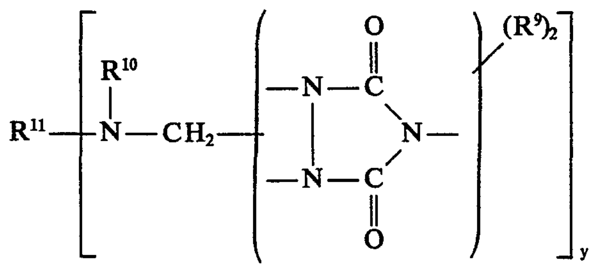

(V)

verwendet werden,

worin

$R^9$ für Wasserstoff, $C_2-C_{10}$ Alkylcarbonyl, einen gegebenenfalls mit Halogen oder Hydroxy substituierten aliphatischen $C_1-C_{10}$, cycloaliphatischen $C_4-C_{10}$, araliphatischen $C_7-C_{10}$, aromatischen $C_6-C_{10}$ Rest,

$R^{10}$ für Wasserstoff, einen gegebenenfalls mit Halogen oder Hydroxy oder $C_1-C_4$ Alkoxy substituierten aliphatischen $C_1-C_{10}$, cycloaliphatischen $C_4-C_{10}$, araliphatischen $C_7-C_{10}$, aromatischen $C_6-C_{10}$ oder einen Rest der allgemeinen Formel

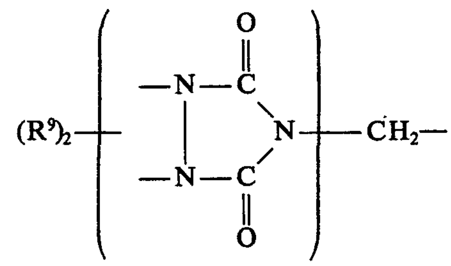

$R^{11}$ für eine Carbonylgruppe, einen gegebenenfalls mit Halogen, Cyan, Hydroxy, Amino, $C_1-C_{10}$ Alkyl- oder Dialkylamino, $C_1-C_{10}$ Alkoxy, Hydroxycarbonyl, $C_2-C_{10}$ Alkoxycarbonyl substituierten y-wertigen aliphatischen $C_1-C_{10}$, cycloaliphatischen $C_4-C_{10}$, araliphatischen $C_7-C_{10}$, aromatischen $C_6-C_{10}$ oder einen Heteroatome wie N, O oder S bzw. Carbonylgruppen im Ring enthaltenen $C_2-C_8$ Cycloalkyl- oder Arylrest und

y für eine ganze Zahl von 1 bis 3 steht.

Besonders bevorzugte Mannichbasen der allgemeinen Formel V sind solche, in denen der Rest $R^{11}$ für

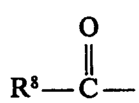

worin

$R^8$ die oben beschriebene Bedeutung hat, oder

für einen Rest der allgemeinen Formel

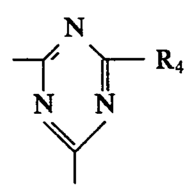

worin

$R^4$ die oben angegebene Bedeutung hat und außerdem für eine Bindung, bevorzugt für H oder eine Bindung steht.

Die erfindungsgemäß einzusetzenden, aus Triazolidin-3,5-dion hergestellten Mannichbasen der allgemeinen Formel IV und V werden erhalten, indem man Triazolidin-3,5-dione mit Formaldehyd, bevorzugt als wäßrige Lösung, und den entsprechenden NH-Verbindungen, gegebenenfalls in

Gegenwart von geeigneten Katalysatoren bei Temperaturen von 10 bis 180°C, gegebenenfalls unter erhöhtem Druck, umsetzt.

Triazolidin-3,5-dione bzw. Reaktionsprodukte aus Triazolidin-3,5-dionen werden zu dem Polyamidharz in einer Menge von 0,1 bis 20 Gew.-% gegeben. Dabei reicht bei der Verwendung von Triazolidin-3,5-dionen bereits eine Menge von 0,1 bis 5 Gew.-%, vorzugsweise 0,2 bis 1,5 Gew.-%, für einen ausreichenden Flammschutz aus. Die Reaktionsprodukte von Triazolidin-3,5-dionen werden in einer Menge von 1 bis 20 Gew.-%, vorzugsweise 3 bis 15 Gew.-%, zu dem Polyamidharz zugegeben.

Verstärkungs- und Füllstoffe können in den erfindungsgemäßen Polyamidformmassen bis zu 60 Gew.-% bezogen auf die Formmasse enthalten sein. Dazu sind u. a. folgende zu nennen: Glasfasern, Kohlefasern, Asbestfasern, Glaskugeln, Talkum, Glimmer, Wollastonit, Micorvit, Kreide, Siliziumdioxid, Graphit, Gips und andere Zusatzstoffe wie Pigmente und Farbstoffe, so z. B. Cadmiumsulfid, Phthalocyanine, Titandioxid.

Als weitere Flammschutzmittel können den Polyamidformmassen eine Kupferverbindung oder ein Gemisch aus einer Kupferverbindung und einem Alkalimetallhalogenid in Mengen von 0,001 bis 1 Gew.-% zugesetzt werden.

Geeignete Kupferverbindungen umfassen vorzugsweise anorganische und organische Kupfersalze. Beispielhaft seien erwähnt: Kupfer-I-chlorid, Kupfer-II-sulfat, Kupfer-I-jodid, Kupfer-II-phosphat, Kupfer-II-acetat, Kupfer-II-stearat, Kupfer-II-benzoat und Kupfer-Chelat-Verbindungen.

Geeignete Alkalimetallhalogenide umfassen Kaliumjodid, Kaliumbromid, Natriumchlorid, Natriumbromid.

Als Hilfs- und Zusatzstoffe können zu den erfindungsgemäßen Polyamidharzmassen aromatische und/oder höhere aliphatische Carbonsäuren sowie deren Alkalimetall- oder Erdalkalimetallsalze, wie z. B. Natriumstearat, Calciumstearat, Isophthalsäure, Terephthalsäure in Mengen von 0,1 bis 1 Gew.-% eingearbeitet werden.

Ferner ist es möglich, beliebige, bekannte Antistatikmittel wie leitfähiger Ruß oder quaternäre Ammoniumsalze zuzusetzen.

Die Zusatzstoffe können dem Polyamidharz nach bekannten Verfahren zugemischt werden, und zwar in zweckentsprechenden Stufen vor der Formgebung. Das einfachste Verfahren besteht darin, die Zusatzstoffe dem Polyamidharz trocken zuzumischen. Die trocken vermischte Masse kann sodann zur Herstellung von Granulaten in der Schmelze extrudiert werden, wobei das Zumischen der Zusatzstoffe auch über bekannte Dosiervorrichtungen zu der plastifizierten Polyamid-Harzmasse im Extruder erfolgen kann. Es ist ferner möglich, zunächst Konzentrate herzustellen, indem man große Mengen der Zusatzstoffe dem Polyamidharz zumischt, um dann diese Konzentratgranulate mit dem Polyamidharz zu vermischen.

Die Formkörper können hergestellt werden durch Formgebung der thermoplastischen Masse oder der Granulate mit Hilfe verschiedener Formmaschinen, insbesondere Spritzgußmaschinen, Extrudiermaschinen oder Preßmaschinen. Die Einarbeitung der Zusatzstoffe kann auch mit Hilfe der Formmaschine geschehen.

Die zur Einarbeitung der Zusatzstoffe erforderlichen Temperatur wird im wesentlichen durch die Schmelztemperatur des einzusetzenden Polyamids bestimmt. Üblicherweise sollte die Verarbeitungstemperatur mindestens 10°, jedoch nicht mehr als 30°C über der Erweichungstemperatur des Polyamids liegen. Sie liegt z. B. für Polyamid 6,6 unterhalb 270°C, während für Polyamid 6 Temperaturen von unterhalb 250°C ausreichend sind.

Die Polyamidharzmassen der vorliegenden Erfindung zeigen eine ausgezeichnete Flammfestigkeit und Hitzebeständigkeit bei ausgezeichneten mechanischen Eigenschaften und ausgezeichneter Formbarkeit und Verpreßbarkeit, die außerdem weder zu Ausplattungen noch zu Ausblühungen führt. Die Polyamidharzmassen sind außerdem, da alle Verbindungen weiß bzw. farblos sind, in hellen Farben zugänglich.

In den nachfolgenden Beispielen sind, wenn nicht anders angegeben, die Prozente Gewichtsprozente und Teile Gewichtsteile.

## Beispiele

### A) Herstellung des Melamin-Triazolidin-3,5-dion-Salzes

4,41 kg Melamin werden in 105 l Wasser durch Erwärmen auf 95°C gelöst und mit 3,73 kg eines technischen, 94,7%igen Triazolidin-3,5-dions (bestimmt mittels Titration mit n/10 Natronlauge gegen Phenolphthalin) versetzt. Die erhaltene Suspension wird zur Vervollständigung der Reaktion noch 3 Stunden bei 95°C nachgerührt, auf Raumtemperatur abgekühlt, abgesaugt, mit Wasser gewaschen und bei 85°C im Vakuum bei 30 mbar getrocknet (Ausbeute 6,9 kg = 90,4% der Theorie). IR-Spektrum und Elementaranalyse bestätigen die angenommene Salzstruktur.

berechnet für $C_5H_9N_9O_2$: C = 26,4%, H = 3,96%, N = 55,5%
gefunden: C = 26,3%, H = 3,9%, N = 55,1%

B) Herstellung einer Mannichbase aus Melamin, Formaldehyd und Triazolidin-3,5-dion

3,03 kg Triazolidin-3,5-dion werden unter Rühren zu 9,75 kg einer 37%igen wäßrigen Formaldehydlösung, die 10 g Borax enthielt, zugegeben und auf 100°C erwärmt. Die entstandene klare Lösung wird 90 Minuten bei 100°C gerührt und durch Abdestillieren des Wassers im Wasserstrahlvakuum eingeengt, wobei der überschüssige Formaldehyd ebenfalls entfernt wird. Die abgekühlte hellgelbe viskose Flüssigkeit, hauptsächlich Trishydroxymethyltriazolidin-3,5-dion, wird bei Raumtemperatur in 90 l entionisiertem Wasser gelöst, mit 11,34 kg Melamin versetzt und langsam bis zum Rückfluß des Wassers erwärmt. Die entstandene Mischung wird zwei Stunden bei Rückfluß gerührt, bei 90°C abgesaugt und mit heißem Wasser gewaschen. Nach dem Trocknen bei 100°C und 30 mbar werden 14,55 kg Mannichbase erhalten, dessen Struktur mittels IR-Spektrum und der Elementaranalyse bestätigt wird.

berechnet für $C_{14}H_{21}N_{21}O_2$: C = 32,7%, H = 4,08%, N = 57,1%
gefunden: C = 32,9%, H = 4,2%, N = 56,5%

C) Herstellung eines Triazolidin-3,5-dions der allgemeinen Formel I
($R^1$, $R^2$ = H, $R^3$ = $-CH_2-CH_2-$)

600 g Hydrazindicarbonsäurediamid und 150 g 1,2-Diaminoethan werden in 500 ml N-Methylpyrrolidon 4 Stunden bei 175°C und 20 Stunden bei 200°C gerührt. Beim Abkühlen fällt ein Niederschlag aus, der abgesaugt und mit Ethanol gewaschen wird. Man erhält 462 g (80% der Theorie) 1,2-Ethandiyl-4,4'-bis-triazolidin-3,5-dion als farblose Kristalle vom Fp > 330°C.

berechnet für $C_6H_8N_6O_4$: C = 31,6%, H = 3,53%, N = 36,8%
gefunden: C = 31,4%, H = 3,6%, N = 36,8%

Beispiele 1 – 10

Die Einarbeitung der erfindungsgemäßen Flammschutzmittel in die Polyamide erfolgte, gegebenenfalls gemeinsam mit Glasfasern, auf einem Doppelwellenextruder ZSK 53 der Firma Werner & Pfleiderer, unter den für Polyamide üblichen Bedingungen. Der abgezogene Strang wird gekühlt, granuliert und getrocknet. Anschließend wird das Granulat auf einer Spritzgießmaschine A 270 der Firma Arburg zu Probekörpern der Abmessung 127 x 12,7 x 1,6 mm gespritzt.

Diese Probekörper werden 24 Stunden bei 23°C und 50% rel. Luftfeuchte gelagert und anschließend der Prüfung gemäß Underwriter's Laboratories (UL) Subject 94 »Vertical Burning Test for Classifying Materials« unterzogen.

In Tabelle 1 sind die Zusammensetzung der Prüfkörper, ihre Klassifizierung nach UL-Subject 94 sowie die Nachbrennzeiten aus 10 Beflammungen aufgeführt, um den verbesserten Brandschutzeffekt zu verdeutlichen.

Bei allen Prüfkörpern konnten während oder nach dem Spritzvorgang, auch über einen längeren Zeitraum, keinerlei Ausplattungserscheinungen festgestellt werden. Nach einer Lagerung von 7 Tagen bei 70°C im Trockenschrank behielten alle Prüfkörper ihren Oberflächenglanz.

Tabelle 1

| Beispiel Polyamid/*) *n* rel | Gew.-% in der Mischung | Flammschutzmittel in Gew.-% | Sonstige Zusätze | UL-Subject 94 127 × 12,7 × 1,6 mm | Nachbrennzeit (sec) |
|---|---|---|---|---|---|
| 1 PA-6/3,01 | 100 | – | – | V-2 | 44 |
| 2 PA-6/3,01 | 99,5 | 0,5% C | – | V-2 | 12 |
| 3 PA-6/3,01 | 95 | 5% A | – | V-0 | 10 |
| 4 PA-6,6/2,96 | 100 | – | – | V-2 | 32 |
| 5 PA-6,6/2,96 | 99,5 | 0,5% C | – | V-0 | 10 |
| 6 PA-6,6/2,96 | 85 | 15% B | – | V-2 | 11 |
| 7 Pa aus Isophthalsäure u. Hexamethylendiamin/2,7 | 100 | – | – | V-2 | 40 |
| 8 desgl. | 99,5 | 0,5% C | – | V-2 | 15 |
| 9 desgl. | 70,1 | – | 29,9% Glasfasern | nicht bestanden**) | >60 |
| 10 desgl. | 60 | 10% A | 30% Glasfasern | V-2 | 21 |

*) Relative Viskosität, gemessen an einer Lösung aus 1 g Polyamid in 100 ml m-Kresol bei 25°C.
**) Prüfkörper brennt bis zur Halteklammer ab.

**Patentansprüche**

1. Selbstverlöschende, gegebenenfalls Füll-, Verstärkungs-, Hilfs- und/oder Zusatzstoffe enthaltende thermoplastische Polyamidformmassen, dadurch gekennzeichnet, daß sie als Flammschutzmittel 0,1–20 Gew.-%, bezogen auf die gesamte Formmasse, Triazolidin-3,5-dione der allgemeinen Formel I

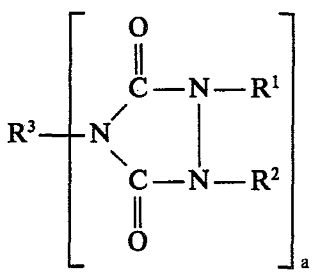

(I)

worin

$R^1$ und $R^2$ gleich oder verschieden, unabhängig voneinander für Wasserstoff, einen gegebenenfalls mit Halogen oder Hydroxy substituierten aliphatischen $C_1-C_6$, cycloaliphatischen $C_4-C_{10}$, araliphatischen $C_7-C_{10}$, aromatischen $C_6-C_{10}$ oder einen gegebenenfalls mit Halogen substituierten $C_2-C_6$ Alkylcarbonyl-Rest,

$R^3$ für einen aliphatischen $C_1-C_{20}$, cycloaliphatischen $C_4-C_{17}$, araliphatischen $C_7-C_{17}$ oder aromatischen $C_6-C_{15}$ Rest und

a für eine ganze Zahl von 2 bis 5 stehen

und/oder Reaktionsprodukte von Triazolidin-3,5-dionen der allgemeinen Formel II

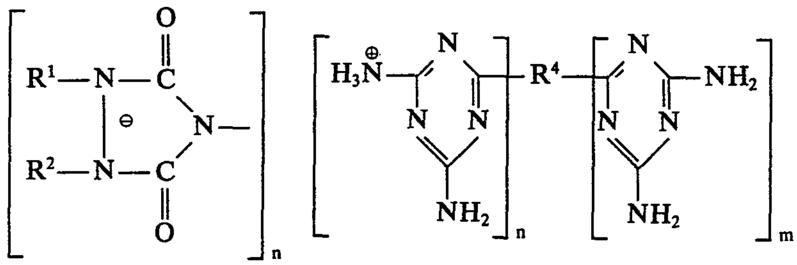

(II)

worin

$R^1$ und $R^2$ die angegebene Bedeutung hat,
$R^4$ für Wasserstoff, eine Aminogruppe, einen gegebenenfalls mit Halogen substituierten aliphatischen $C_1-C_{20}$, cycloaliphatischen $C_4-C_{17}$, araliphatischen $C_7-C_{17}$ oder aromatischen $C_6-C_{15}$ Rest,
n für eine ganze Zahl von 1 bis 4 und
m für eine ganze Zahl von 0 bis 3 stehen, wobei m und n höchstens 4 sein kann,

der allgemeinen Formel III

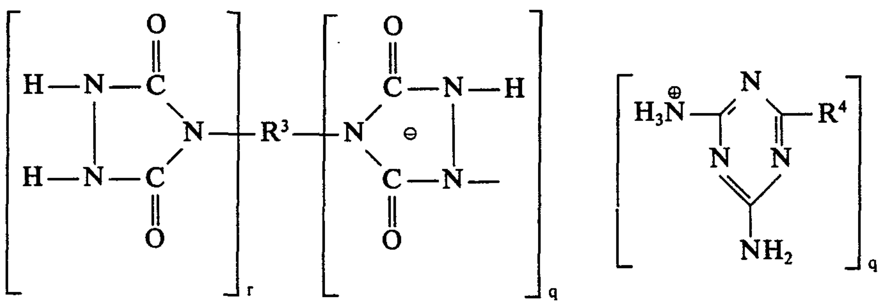

(III)

worin

$R^3$ und $R^4$ die angegebene Bedeutung hat und
q für eine ganze Zahl von 1 bis 5
r für eine ganze Zahl von 0 bis 4 steht, wobei q und r höchstens 5 sein kann,

der allgemeinen Formeln IVa und IVb

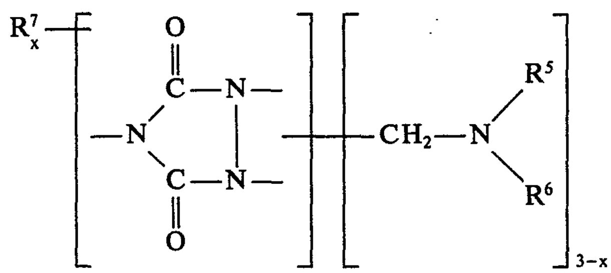

(IVa)

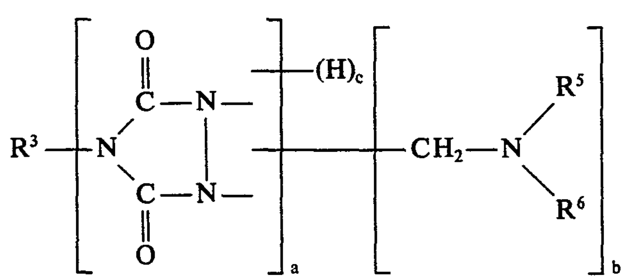

(IVb)

worin

$R^3$ die angegebene Bedeutung hat,
$R^5$ für Wasserstoff, einen gegebenenfalls mit Halogen, Hydroxy oder $C_1-C_4$-Alkoxy substituierten aliphatischen $C_1-C_{10}$, cycloaliphatischen $C_4-C_{10}$, araliphatischen $C_7-C_{10}$,

aromatischen $C_6-C_{10}$ und einen Heteroatome wie N, O oder S und/oder Carbonylgruppen im Ring enthaltenden $C_2-C_8$ Cycloalkyl oder Arylrest,

$R^6$ für einen gegebenenfalls mit Halogen, Cyan-, Hydroxy-, Amino-, $C_1-C_4$ Alkyl- oder Dialkylamino-, $C_1-C_4$ Alkoxy-, Hydroxycarbonyl-, $C_2-C_4$ Alkoxycarbonyl-Gruppen substituierten aliphatischen $C_1-C_{10}$, cycloaliphatischen $C_4-C_{10}$, araliphatischen $C_7-C_{10}$, aromatischen $C_6-C_{10}$ oder Heteroatome wie N, O oder S bzw. Carbonylgruppen im Ring enthaltenden $C_2-C_{12}$ Cycloalkyl- oder Arylrest,

$R^7$ für Wasserstoff, einen gegebenenfalls mit Halogen oder Hydroxy substituierten aliphatischen $C_1-C_6$, cycloaliphatischen $C_4-C_{10}$, araliphatischen $C_7-C_{10}$ oder aromatischen $C_6-C_{10}$ Rest,

x für 0 bis 2,

b für eine ganze Zahl von 1 bis 2a und

c für eine ganze Zahl von 2a − b stehen,

oder der allgemeinen Formel V

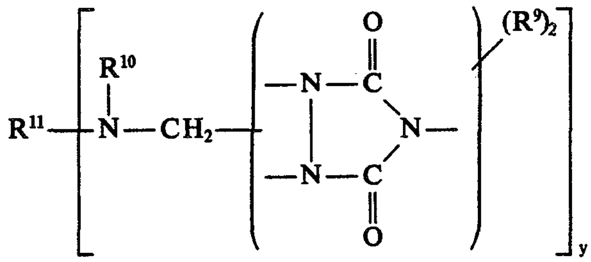

(V)

worin

$R^9$ für Wasserstoff, $C_2-C_{10}$ Alkylcarbonyl, einen gegebenenfalls mit Halogen oder Hydroxy substituierten aliphatischen $C_1-C_{10}$, cycloaliphatischen $C_4-C_{10}$, araliphatischen $C_7-C_{10}$, aromatischen $C_6-C_{10}$ Rest,

$R^{10}$ für Wasserstoff, einen gegebenenfalls mit Halogen oder Hydroxy oder $C_1-C_4$ Alkoxy substituierten aliphatischen $C_1-C_{10}$, cycloaliphatischen $C_4-C_{10}$, araliphatischen $C_7-C_{10}$, aromatischen $C_6-C_{10}$ oder einen Rest der allgemeinen Formel

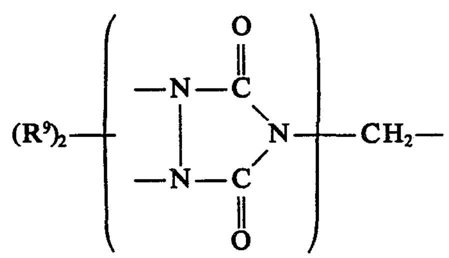

$R^{11}$ für eine Carbonylgruppe, einen gegebenenfalls mit Halogen, Cyan, Hydroxy, Amino, $C_1-C_{10}$ Alkyl- oder Dialkylamino, $C_1-C_{10}$ Alkoxy, Hydroxycarbonyl, $C_2-C_{10}$ Alkoxycarbonyl substituierten y-wertigen aliphatischen $C_1-C_{10}$, cycloaliphatischen $C_4-C_{10}$, araliphatischen $C_7-C_{10}$, aromatischen $C_6-C_{10}$ oder einen Heteroatome wie N, O oder S bzw. Carbonylgruppen im Ring enthaltenden $C_2-C_8$ Cycloalkyl- oder Aryl-Rest und

Y für eine ganze Zahl von 1 bis 3 stehen, enthalten.

2. Polyamidformmassen nach Anspruch 1, dadurch gekennzeichnet, daß in der allgemeinen Formel I

$R^1$ und $R^2$ gleich oder verschieden unabhängig voneinander für Wasserstoff, einen $C_1-C_4$ Alkyl-, $C_4-C_6$ Cycloalkyl oder einen mit $CH_3$ substituierten Phenylrest,

$R^3$ für einen $C_1-C_6$ aliphatischen, $C_4-C_{10}$ cycloaliphatischen oder einen mit $-CH_3$ substituierten $C_6-C_{12}$ aromatischen Rest stehen.

3. Polyamidformmassen nach Anspruch 1, dadurch gekennzeichnet, daß in der allgemeinen Formel II

$R^1$ und $R^2$ die in Anspruch 2 angegebene Bedeutung hat und

$R^4$ für eine Aminogruppe und

n für eine ganze Zahl 1 oder 2 steht.

4. Polyamidformmassen nach Anspruch 1, dadurch gekennzeichnet, daß in der allgemeinen Formel III

$R^3$ die in Anspruch 2 und
$R^4$ die in Anspruch 3 angegebene Bedeutung hat.

5. Polyamidformmassen nach Anspruch 1, dadurch gekennzeichnet, daß in der allgemeinen Formel IV

$R^5$ für Wasserstoff oder niederen Alkylrest,
$R^6$ für einen Rest

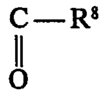

worin

$R^8$ für einen aliphatischen $C_1-C_{10}$, cycloaliphatischen $C_4-C_{10}$, araliphatischen $C_7-C_{15}$ oder aromatischen $C_6-C_{10}$ Rest steht und die Reste $R^5$ und $R^6$ auch als Glieder eines cyclischen $C_2-C_8$ Restes, der gegebenenfalls noch weitere Heteroatome wie N, O, S und/oder Carbonylgruppen im Ring enthalten kann, miteinander verknüpft sein können, stehen.

6. Polyamidformmassen nach Anspruch 1, dadurch gekennzeichnet, daß in der allgemeinen Formel V

$R^{11}$ für

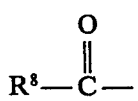

worin

$R^8$ die in Anspruch 5 angegebene Bedeutung hat, oder für einen Rest der allgemeinen Formel

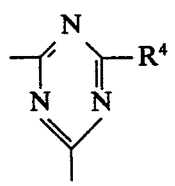

steht,

worin

$R^4$ die in Anspruch 1 angegebene Bedeutung hat und außerdem für eine Bindung stehen kann.

7. Polyamidformmassen nach Ansprüchen 1–6, dadurch gekennzeichnet, daß als Flammschutzmittel Bis-(triazolidin-3,5-dion-4-yl)-methan, 1,2-Bis-(triazolidin-4-yl)-ethan, 1,6-Bis-(triazolidin-3,5-dion-4-yl)-hexan oder Triazolidin-3,5-dion-Salze aus Triazolidin-3,5-dion und Melamin und/oder 1,2-Bis-(4,6-diamino-1,3,5-triazin-2-yl)-ethan und/oder 1,4-Bis-(4,6-diamino-1,3,5-triazin-2-yl)-butan und/oder 1,6-Bis- und/oder 1,3,6-Tris(4,6-diamino-1,3,5-triazin-2-yl)hexan, sowie Melamin und Bis-(triazolidin-3,5-dion-yl-4)-hexan und/oder 4,4'-Bis-(triazolidin-3,5-dion-yl-4)-dicyclohexylmethan eingesetzt werden.

8. Polyamidformmassen nach Ansprüchen 1–7, dadurch gekennzeichnet, daß sie als weitere Flammschutzmittel eine Kupferverbindung oder ein Gemisch aus einer Kupferverbindung und einem Alkalimetallhalogenid in Mengen von 0,001 bis 1 Gew.-% enthalten.

## Claims

1. Self-extinguishing thermoplastic polyamide moulding compositions which optionally contain fillers, reinforcing materials, auxiliaries and/or additives, characterised in that as a flameproofing agent, they contain from 0.1 to 20% by weight, based on the total moulding composition, of

triazolidine-3,5-diones corresponding to the general formula I

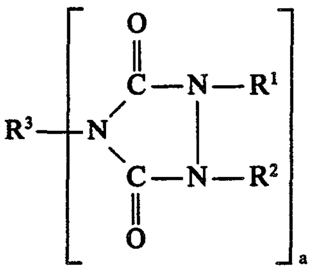

(I)

wherein

$R^1$ and $R^2$ which may be the same or different, independently represent hydrogen, a $C_1-C_6$ aliphatic, $C_4-C_{10}$ cycloaliphatic, $C_7-C_{10}$ araliphatic, $C_6-C_{10}$ aromatic radical which may be substituted by halogen or hydroxy, or a $C_2-C_6$ alkyl carbonyl radical which may be substituted by halogen,

$R^3$ represents a $C_1-C_{20}$ aliphatic, $C_4-C_{17}$ cycloaliphatic, $C_7-C_{17}$ araliphatic or $C_6-C_{15}$ aromatic radical, and

a represents an integer from 2 to 5,

and/or reaction products of triazolidine-3,5-diones corresponding to the general formula II

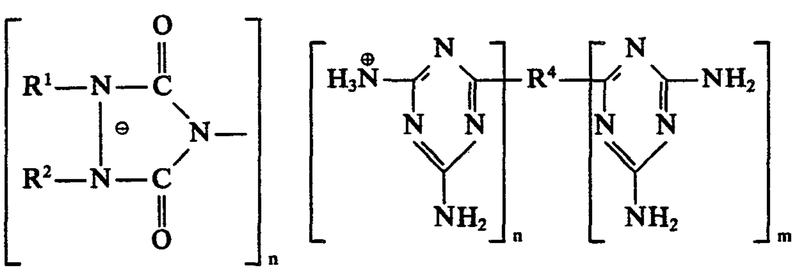

(II)

wherein

$R^1$ and $R^2$ are as defined above,

$R^4$ represents hydrogen, an amino group, a $C_1-C_{20}$ aliphatic, $C_4-C_{17}$ cycloaliphatic, $C_7-C_{17}$ araliphatic or $C_6-C_{15}$ aromatic radical which may be substituted by halogen,

n represents an integer from 1 to 4, and

m represents an integer from 0 to 3, and m and n may represent 4 at the most,

corresponding to the general formula III

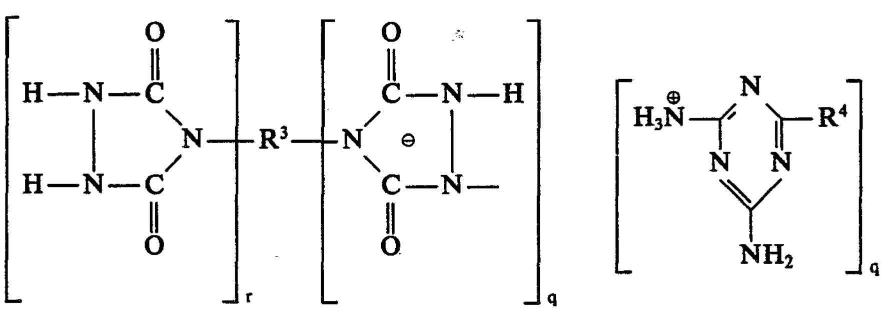

(III)

wherein

$R^3$ and $R^4$ are as defined above and

q represents an integer from 1 to 5,

r represents an integer from 0 to 4, q and r may represent 5 at the most,

corresponding to the general formulae IVa and IVb

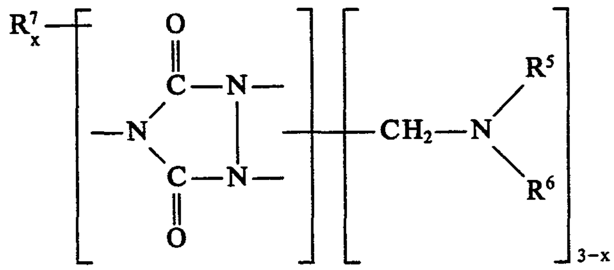

(IVa)

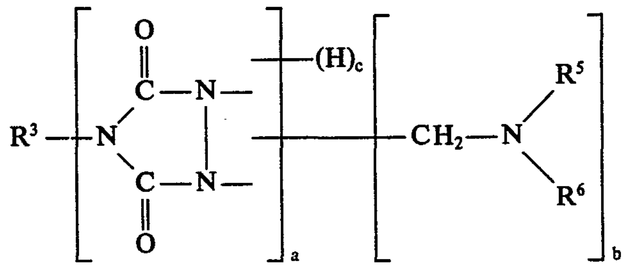

(IVb)

wherein

$R^3$ is as defined above,

$R^5$ represents hydrogen, a $C_1-C_{10}$ aliphatic, $C_4-C_{10}$ cycloaliphatic, $C_7-C_{10}$ araliphatic, $C_6-C_{10}$ aromatic or a $C_2-C_8$ cycloalkyl or aryl radical containing heteroatoms such as N, O or S and/or carbonyl groups in the ring, which radicals may be substituted by halogen, hydroxy or $C_1-C_4$ alkoxy,

$R^6$ represents a $C_1-C_{10}$ aliphatic, $C_4-C_{10}$ cycloaliphatic, $C_7-C_{10}$ araliphatic, $C_6-C_{10}$ aromatic or a $C_2-C_{12}$ cycloalkyl or aryl radical containing heteroatoms such as N, O or S or carbonyl groups in the ring, which radicals may be substituted by halogen, cyano, hydroxy, amino, $C_1-C_4$ alkyl- or dialkylamino, $C_1-C_4$ alkoxy, hydroxycarbonyl or $C_2-C_4$ alkoxy carbonyl groups,

$R^7$ represents hydrogen, a $C_1-C_6$ aliphatic, $C_4-C_{10}$ cycloaliphatic, $C_7-C_{10}$ araliphatic or $C_6-C_{10}$ aromatic radical which may be substituted by halogen or hydroxy,

x represents 0 to 2,

b represents an integer from 1 to 2a, and

c represents an integer of $2a-b$,

or corresponding to the general formula V

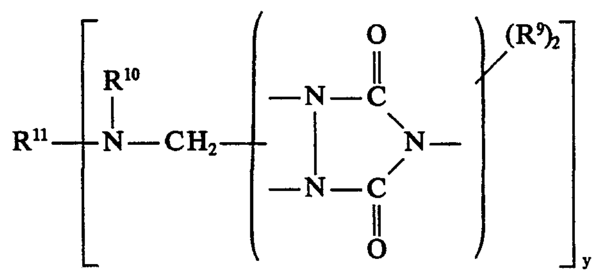

(V)

wherein

$R^9$ represents hydrogen, $C_2-C_{10}$ alkyl carbonyl, a $C_1-C_{10}$ aliphatic, $C_4-C_{10}$ cycloaliphatic, $C_7-C_{10}$ araliphatic or $C_6-C_{10}$ aromatic radical which may be substituted by halogen or hydroxy,

$R^{10}$ represents hydrogen, a $C_1-C_{10}$ aliphatic, $C_4-C_{10}$ cycloaliphatic, $C_7-C_{10}$ araliphatic or $C_6-C_{10}$ aromatic radical which may be substituted by halogen or hydroxy or $C_1-C_4$ alkoxy, or a radical corresponding to the general formula

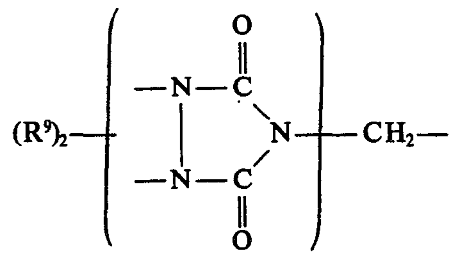

$R^{11}$ represents a carbonyl group, a y-valent $C_1-C_{10}$ aliphatic, $C_4-C_{10}$ cycloaliphatic, $C_7-C_{10}$ araliphatic, $C_6-C_{10}$ aromatic or a $C_2-C_8$ cycloalkyl or aryl radical containing heteroatoms such as N, O or S or carbonyl groups in the ring, which radicals may be substituted by halogen, cyano, hydroxy, amino, $C_1-C_{10}$ alkyl- or dialkylamino, $C_1-C_{10}$ alkoxy, hydroxy carbonyl or $C_2-C_{10}$ alkoxy carbonyl, and

y represents an integer from 1 to 3.

2. Polyamide moulding compositions according to claim 1, characterised in that in the general formula I

$R^1$ and $R^2$ which may be the same or different, independently represent hydrogen, a $C_1-C_4$ alkyl, $C_4-C_6$ cycloalkyl or a phenyl radical substituted by $CH_3$, and

$R^3$ represents a $C_1-C_6$ aliphatic, $C_4-C_{10}$ cycloaliphatic or a $C_6-C_{12}$ aromatic radical which is substituted by $-CH_3$.

3. Polyamide moulding compositions according to claim 1, characterised in that in the general formula II

$R^1$ and $R^2$ are as defined in claim 2, and

$R^4$ represents an amino group, and

n represents an integer 1 or 2.

4. Polyamide moulding compositions according to claim 1, characterised in that in the general formula (III)

$R^3$ is as defined in claim 2, and

$R^4$ is as defined in claim 3.

5. Polyamide moulding compositions according to claim 1, characterised in that in the general formula IV

$R^5$ represents hydrogen or a lower alkyl radical,

$R^6$ represents a radical

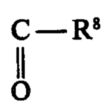

wherein

$R^8$ represents a $C_1-C_{10}$ aliphatic, $C_4-C_{10}$ cycloaliphatic, $C_7-C_{15}$ araliphatic or $C_6-C_{10}$ aromatic radical, and the radicals $R^5$ and $R^6$ may also be linked together as members of a cyclic $C_2-C_8$ radical which may optionally contain other heteroatoms such as N, O, S and/or carbonyl groups in the ring.

6. Polyamide moulding compositions according to claim 1, characterised in that in the general formula V

$R^{11}$ represents

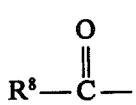

wherein

$R^8$ is as defined in claim 5, or represents a radical corresponding to the general formula

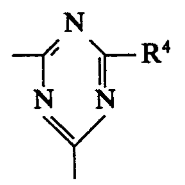

wherein

$R^4$ is as defined in claim 1 and may also represent a bond.

7. Polyamide moulding compositions according to claims 1 to 6, characterised in that the following are used as flameproofing agents: bis-(triazolidine-3,5-dion-4-yl)-methane, 1,2-bis-(triazolidin-4-yl)-ethane, 1,6-bis-(triazolidine-3,5-dion-4-yl)-hexane, or triazolidine-3,5-dione salts from triazolidine-3,5-dione and melamine, and/or 1,2-bis-(4,6-diamino-1,3,5-triazin-2-yl)-ethane and/or 1,4-bis-(4,6-diamino-1,3,5-triazin-2-yl)-butane and/or 1,6-bis- and/or 1,3,6-tris(4,6-diamino-1,3,5-triazin-2-yl)-hexane, and melamine and bis-(triazolidine-3,5-dion-yl-4)-hexane and/or 4,4'-bis-(triazolidine-3,5-dion-yl-4)dicyclohexylmethane).

8. Polyamide moulding compositions according to claims 1 to 7, characterised in that as other flameproofing agents, they contain a copper compound or a mixture of a copper compound and an alkali metal halide in quantities of from 0.001 to 1% by weight.

**Revendications**

1. Matières à mouler thermoplastiques en polyamide auto-extinguibles, contenant éventuellement des charges, des substances de renforcement, des adjuvants et/ou des additifs, caractérisées en ce qu'elles contiennent 0,1 à 20% en poids, par rapport à la matière à mouler totale, comme agents retardateurs de flamme, de triazolidine-3,5-diones de formule générale I

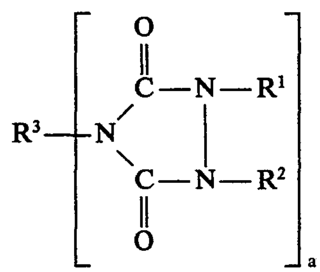

(I)

dans laquelle

$R^1$ et $R^2$ égaux ou différents, représentent, indépendamment l'un de l'autre, l'hydrogène, un reste aliphatique en $C_1$ à $C_6$, cycloaliphatique en $C_4$ à $C_{10}$ araliphatique en $C_7$ à $C_{10}$, aromatique en $C_6$ à $C_{10}$ éventuellement substitué avec un halogène ou un radical hydroxy, ou un reste alkylcarbonyle en $C_2$ à $C_6$ éventuellement substitué avec un halogène,

$R^3$ désigne un reste aliphatique en $C_1$ à $C_{20}$, cycloaliphatique en $C_4$ à $C_{17}$, araliphatique en $C_7$ à $C_{17}$ ou aromatique en $C_6$ à $C_{15}$ et

a est un nombre entier de 2 à 5

et/ou de produits de réaction de triazolidine-3,5-diones de formule générale II

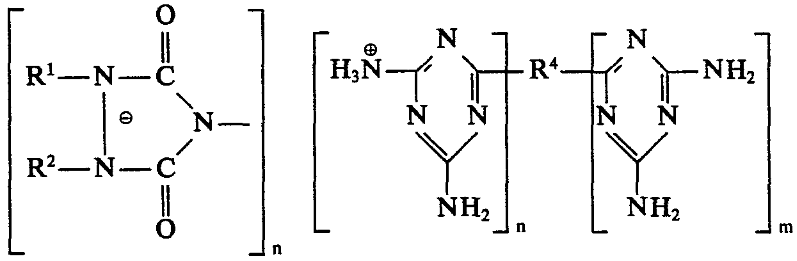

(II)

dans laquelle

| | |
|---|---|
| $R^1$ et $R^2$ | ont la définition donnée ci-dessus, |
| $R^4$ | désigne l'hydrogène, un groupe amino, un reste aliphatique en $C_1$ à $C_{20}$, cycloaliphatique en $C_4$ à $C_{17}$, araliphatique en $C_7$ à $C_{17}$ ou aromatique en $C_6$ à $C_{15}$ éventuellement substitué avec un halogène, |
| n | désigne un nombre entier de 1 à 4 et |
| m | désigne un nombre entier de 0 à 3, m et n pouvant au maximum être égaux à 4, |

de formule générale III

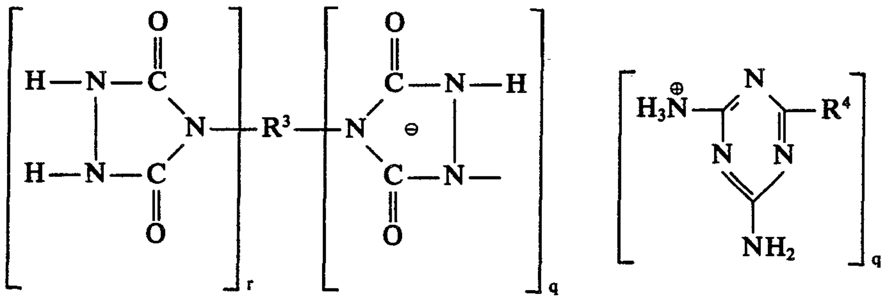

(III)

dans laquelle

| | |
|---|---|
| $R^3$ et $R^4$ | ont la définition indiquée et |
| q | est un nombre entier de 1 à 5 |
| r | est un nombre entier de 0 à 4, q et r pouvant au maximum être égaux à 5, |

de formules générales IVa et IVb

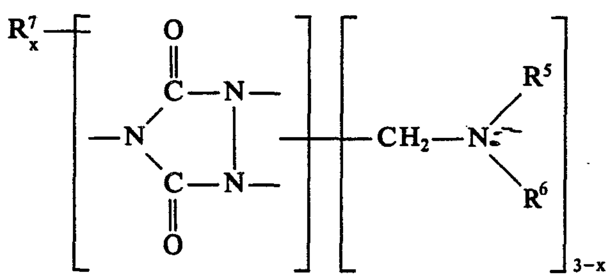

(IVa)

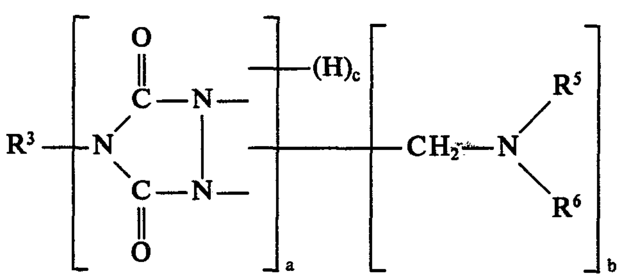

(IVb)

dans lesquelles

| | |
|---|---|
| $R^3$ | a la définition indiquée, |
| $R^5$ | désigne l'hydrogène, un reste aliphatique en $C_1$ à $C_{10}$, cycloaliphatique en $C_4$ à $C_{10}$, araliphatique en $C_7$ à $C_{10}$, aromatique en $C_6$ à $C_{10}$ éventuellement substitué avec un halogène, un radical hydroxy ou un radical alkoxy en $C_1$ à $C_4$, et un reste cycloalkyle en $C_2-C_8$ ou aryle contenant des hétéro-atomes tels que N, O ou S et/ou des groupes carbonyle dans le noyau, |
| $R^6$ | désigne un reste aliphatique en $C_1$ à $C_{10}$, un reste cycloaliphatique en $C_4$ à $C_{10}$, un reste araliphatique en $C_7$ à $C_{10}$, un reste aromatique en $C_6$ à $C_{10}$ éventuellement substitués avec un halogène ou des groupes cyano, hydroxy, amino, (alkyle en $C_1$ à $C_4$)- ou di-(alkyle en $C_1$ à $C_4$)-amino, alkoxy en $C_1$ à $C_4$, hydroxycarbonyle, alkoxycarbonyle en $C_2$ à $C_4$, ou bien un reste cycloalkyle ou aryle en $C_2$ à $C_{12}$ contenant des hétéro-atomes tels que N, O ou S ou des groupes carbonyle dans le noyau, |
| $R^7$ | désigne l'hydrogène, un reste aliphatique en $C_1$ à $C_6$, un reste cycloaliphatique en $C_4$ à $C_{10}$, |

un reste araliphatique en $C_7$ à $C_{10}$ ou un reste aromatique en $C_6$ à $C_{10}$ éventuellement substitués avec un halogène ou un radical hydroxy,

x a une valeur de 0 à 2,

b est un nombre entier de 1 à 2a et

c est un nombre entier de 2a à b,

ou de formule générale V

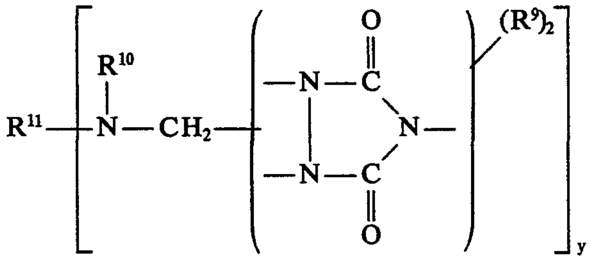

(V)

dans laquelle

$R^9$ désigne l'hydrogène, un groupe alkylcarbonyle en $C_2$ à $C_{10}$, un reste aliphatique en $C_1$ à $C_{10}$, un reste cycloaliphatique en $C_4$ à $C_{10}$, un reste araliphatique en $C_7$ à $C_{10}$, un reste aromatique en $C_6$ à $C_{10}$ éventuellement substitués avec un halogène ou un radical hydroxy,

$R^{10}$ désigne l'hydrogène, un reste aliphatique en $C_1$ à $C_{10}$, cycloaliphatique en $C_4$ à $C_{10}$, araliphatique en $C_7$ à $C_{10}$, aromatique en $C_6$ à $C_{10}$ éventuellement substitués avec un halogène ou un radical hydroxy ou alkoxy en $C_1$ à $C_4$, ou un reste de formule générale

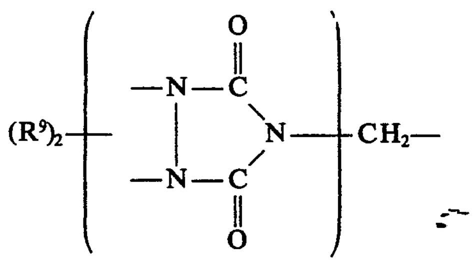

$R^{11}$ désigne un groupe carbonyle, un reste aliphatique y-valent en $C_1$ à $C_{10}$, cycloaliphatique en $C_4$ à $C_{10}$, araliphatique en $C_7$ à $C_{10}$, aromatique en $C_6$ à $C_{10}$ éventuellement substitués avec un halogène ou un radical cyano, hydroxy, amino, alkyl- ou dialkylamino en $C_1$ à $C_{10}$, alkoxy en $C_1$ à $C_{10}$, hydroxycarbonyle, alkoxycarbonyle en $C_2$ à $C_{10}$, ou un reste cycloalkyle ou aryle en $C_2$ à $C_8$ portant des hétéro-atomes tels que N, O ou S ou des groupes carbonyle dans le noyau et

Y désigne un nombre entier de 1 à 3.

2. Matières à mouler en polyamide suivant la revendication 1, caractérisées en ce que, dans la formule générale I

$R^1$ et $R^2$ égaux ou différents, représentent, indépendamment l'un de l'autre, l'hydrogène, un reste alkyle en $C_1$ à $C_4$, cycloalkyle en $C_4$ à $C_6$ ou un reste phényle à substituant $CH_3$,

$R^3$ est un reste aliphatique en $C_1$ à $C_6$, cycloaliphatique en $C_4$ à $C_{10}$ ou un reste aromatique en $C_6$ à $C_{12}$ à substituant $-CH_3$.

3. Matières à mouler en polyamide suivant la revendication 1, caractérisées en ce que, dans la formule générale II

$R^1$ et $R^2$ ont la définition indiquée dans la revendication 2 et

$R^4$ est un groupe amino et

n est un nombre entier égal à 1 ou 2.

4. Matières à mouler en polyamide suivant la revendication 1, caractérisées en ce que, dans la formule générale III

$R^3$ a la définition indiquée dans la revendication 2 et

$R^4$ a la définition indiquée dans la revendication 3.

5. Matières à mouler en polyamide suivant la revendication 1, caractérisées en ce que dans la formule générale IV

$R^5$ désigne l'hydrogène ou un reste alkyle inférieur

$R^6$ est un reste de formule

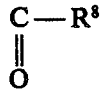

;

dans laquelle

$R^8$ représente un reste aliphatique en $C_1$ à $C_{10}$, cycloaliphatique en $C_4$ à $C_{10}$, araliphatique en $C_7$ à $C_{15}$ ou aromatique en $C_6$ à $C_{10}$ et les restes $R^5$ et $R^6$ peuvent être liés ensemble comme chaînons d'un reste cyclique en $C_2$ à $C_8$ qui peut comporter éventuellement d'autres hétéro-atomes tels que N, O, S et/ou des groupes carbonyle dans le noyau.

6. Matières à mouler en polyamide suivant la revendication 1, caractérisées en ce que, dans la formule générale V

$R^{11}$ est un groupe de formule

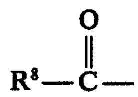

dans laquelle

$R^8$ a la définition indiquée dans la revendication 5, ou représente un reste de formule générale

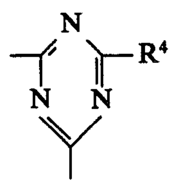

dans laquelle

$R^4$ a la définition indiquée dans la revendication 1 et peut en outre représenter une liaison.

7. Matières à mouler en polyamide suivant les revendications 1–6, caractérisées en ce qu'on utilise comme retardateurs de flamme le bis-(triazolidine-3,5-dione-4-yl)-méthane, le 1,2-bis-(triazolidine-4-yl)-éthane, le 1,6-bis-(triazolidine-3,5-dione-4-yl)-hexane ou des sels de triazolidine-3,5-dione dérivés de la triazolidine-3,5-dione et de la mélamine et/ou du 1,2-bis-(4,6-diamino-1,3,5-triazine-2-yl)-éthane et/ou du 1,4-bis-(4,6-diamino-1,3,5-triazine-2-yl)-butane et/ou du 1,6-bis- et/ou du 1,3,6-tris-(4,6-diamino-1,3,5-triazine-2-yl)-hexane, ainsi que de mélamine et de bis-(triazolidine-3,5-dione-yl-4)-hexane et/ou de 4,4'-bis-(triazolidine-3,5-dione-yl-4)-dicyclohexylméthane.

8. Matières à mouler en polyamide suivant les revendications 1–7, caractérisées en ce qu'elles contiennent comme autres retardateurs de flamme un composé de cuivre ou un mélange d'un composé de cuivre et d'un halogénure de métal alcalin en quantités de 0,001 à 1% en poids.